# FASCICULE DE BREVET EUROPEEN

(11) **EP 2 872 300 B1**
(45) Date de publication et mention de la délivrance du brevet: **17.08.2016**
(21) Numéro de dépôt: 13735292.8
(22) Date de dépôt: 11.07.2013
(51) Int. Cl.: G21F 7/04, B65G 65/38, G21F 7/06, B25J 11/00

(54) **DISPOSITIF DE MANUTENTION D'ETUIS CONTENANT DES OBJETS**
VORRICHTUNG ZUR HANDHABUNG VON BEHÄLTERN MIT GEGENSTÄNDEN
DEVICE FOR HANDLING CASES CONTAINING OBJECTS

(30) Priorité: 13.07.2012 FR 1256810
(43) Date de publication de la demande: 20.05.2015
(73) Titulaire: AREVA NC, 92400 Courbevoie (FR)
(72) Inventeur: COLIN, Bruno, 84100 Orange (FR); COLLETTE, Luc, 84270 Vedène (FR)
(74) Mandataire: Brevalex
(86) Numéro de dépôt international: PCT/EP2013/064691
(87) Numéro de publication internationale: WO 2014/009476

(56) Documents cités:
- FR-A1- 2 964 091
- JP-A- 2009 047 668

## Description

### DOMAINE TECHNIQUE ET ART ANTÉRIEUR

La présente invention se rapporte à un dispositif de manutention d'étuis contenant des objets ; par exemple, il peut s'agir d'étuis contenant des boîtes remplies de matériaux destinés à la fabrication du combustible nucléaire.

Un tel dispositif est par exemple présenté dans le document FR 2964091.

Les matériaux entrant dans la fabrication du combustible nucléaire par exemple de MOX sont pour certains transportés dans des boîtes fermées de manière étanche disposées à l'intérieur d'étuis eux-mêmes fermés de manière étanche.

Par exemple dans le cas de la fabrication de combustible MOX, l'oxyde de plutonium est récupéré après retraitement des combustibles usagés, et est stocké dans des boîtes métalliques fermées de manière étanche, ces boîtes étant empilées dans un étui également métallique et fermé de manière étanche. Ces étuis sont alors transportés des ateliers de retraitement du combustible nucléaire usé vers les ateliers de fabrication du combustible MOX.

Lorsque cet étui arrive dans l'installation de fabrication du combustible MOX, celui-ci est ouvert et les boîtes d'oxyde de plutonium sont déchargées en vue de l'utilisation de l'oxyde de plutonium.

L'ouverture de l'étui et la manipulation des boîtes de plutonium se font dans une boîte à gants à l'aide de robots qui peuvent être commandés de l'extérieur de la boîte à gants. Par conséquent, le ou les dispositifs manipulant les étuis et les boîtes doivent être de réalisation robuste et fiable afin de réduire le nombre d'incidents et éviter ainsi les maintenances qui sont complexes et généralement très longues à réaliser dans une boîte à gants. En outre, les boîtes doivent être manipulées avec précaution pour éviter leur endommagement, ce qui pourrait provoquer une fuite du matériau qu'elles contiennent ou gêner leur manutention dans la suite de l'installation, par exemple pour leur ouverture et /ou leur stockage.

### EXPOSÉ DE L'INVENTION

C'est par conséquent un but de la présente invention d'offrir un dispositif de manutention d'étui contenant des objets permettant l'ouverture de l'étui et l'extraction une à une des boîtes contenues dans cet étui, le dispositif étant de réalisation simple et robuste et assurant une manipulation sûre des étuis et des boîtes.

Le but précédemment énoncé est atteint par un dispositif de manutention comportant un logement destiné à recevoir l'étui, ce logement étant fermé à une extrémité et comportant à l'autre extrémité des moyens de maintien de l'étui, ces moyens comportant deux mâchoires destinées à serrer l'étui, ces moyens comportant également deux mâchoires formant butée pour les boîtes contenues dans l'étui lorsque l'étui est ouvert. Ces mâchoires sont montées libres sur les mâchoires de serrage de l'étui et sont rappelées l'une vers l'autre par de moyens élastiques de telle sorte que, à l'ouverture des mâchoires de serrage, les mâchoires de butée soient également ouvertes et de telle sorte que les mâchoires de butée puissent être ouvertes indépendamment des mâchoires de serrage.

De manière très avantageuse, ces mâchoires de butée coopèrent avec un dispositif de récupération de boîtes lorsqu'elles sont évacuées de l'étui, ce dispositif de récupération comportant des doigts destinés à coopérer avec les mâchoires de butée pour les écarter et permettre le passage des boîtes alors que l'étui est maintenu serré par les mâchoires de serrage. Les boîtes sont alors extraites de l'étui et réceptionnées par le dispositif de récupération.

De manière très avantageuse, l'évacuation des boîtes s'effectue par gravité.

Préférentiellement, le logement est réalisé dans une roue mobile en rotation autour de son axe, le logement s'étendant le long d'un diamètre de la roue, la rotation de la roue permettant à l'étui d'atteindre différentes stations où il subit différentes opérations.

La présente invention a alors pour objet un dispositif de manutention d'étuis et de boîtes contenus dans les étuis, les étuis étant de forme cylindrique, ledit dispositif comportant un logement d'axe longitudinal destiné à recevoir un étui, ledit logement étant fermé à une première extrémité longitudinale et ouvert à une seconde extrémité longitudinale, un dispositif de maintien monté au niveau de la seconde extrémité du logement, ledit dispositif de maintien comportant deux mâchoires de serrage aptes à être déplacées autour d'un axe orthogonal à l'axe longitudinal du logement, lesdites mâchoires de serrage étant destinées à appliquer un effort de serrage sur l'étui de sorte à le tenir longitudinalement dans le logement, au moins un actionneur pour ouvrir et fermer lesdites mâchoires de serrage, deux mâchoires de butée, chacune étant portée par une mâchoire de serrage et étant articulée de manière libre autour de l'axe de rotation de la mâchoire de serrage, lesdits mâchoires de butée étant rappelées l'une vers l'autre en position butée par des moyens élastiques, de telle sorte que l'ouverture des mâchoires de serrage provoque l'ouverture des mâchoires de butée et de telle sorte que les mâchoires de butée peuvent être ouverte indépendamment des mâchoires de serrage.

Le dispositif peut comporter une roue mobile en rotation autour de son axe, ledit logement étant réalisé dans ladite roue et s'étendant le long d'un diamètre de ladite roue.

L'une des mâchoires de serrage peut comporter un épaulement formant une butée longitudinale pour l'étui. L'autre mâchoire de serrage peut comporter une face inclinée par rapport à l'axe du logement vers l'extérieur du logement.

De manière avantageuse, au moins l'une des mâchoires de butée comporte un rouleau libre en rotation bordant le passage délimité par les deux mâchoires de butée de sorte à faciliter la sortie de l'objet contenu dans l'étui.

Dans un exemple de réalisation, chaque mâchoire de butée comporte des faces d'ouverture de part et d'autre du passage délimité par les deux mâchoires de butée, lesdites faces d'ouverture d'une mâchoire de butée étant en regard des faces d'ouverture de l'autre mâchoire de butée, lesdites faces d'ouverture étant destinées à coopérer chacune avec des rampes portées par un dispositif d'ouverture.

De manière avantageuse, les faces d'ouverture comportent chacune un rouleau libre en rotation coopérant avec une desdites rampes.

De préférence le dispositif de manutention comporte au moins un capteur de mesure de la position des mâchoires de butée.

De manière très avantageuse, le dispositif comporte un capteur unique mesurant la position relative des mâchoires de butée, ledit capteur étant porté par un bras solidaire en mouvement d'une des mâchoires et étant sensible au déplacement d'un autre bras solidaire en mouvement de l'autre mâchoire de butée.

Le dispositif peut comporter un actionneur pour déplacer en rotation l'une des mâchoires de serrage et des moyens de transmission pour transmettre le mouvement à l'autre mâchoire de serrage de sorte à provoquer un éloignement ou un rapprochement des mâchoires de serrage.

Par exemple, les mâchoires de serrage comportent deux flasques latéraux articulés sur un bâti du dispositif de manutention, et dans lequel les moyens de transmission sont formés par des dents portées par chaque flasque latéral, lesdits flasques latéraux comportant des dents s'engrenant de sorte que la rotation dans un sens de l'une des mâchoire de serrage provoque la rotation dans un sens opposé de l'autre mâchoire de serrage.

Les moyens élastiques rappelant les mâchoires de butée peuvent comporter deux ressorts hélicoïdaux disposés de part et d'autre de l'axe longitudinal du logement, chaque ressort hélicoïdal étant fixé par une extrémité à une mâchoire de butée et par une autre extrémité à l'autre mâchoire de butée. Avantageusement, le dispositif comporte des moyens de réglage de la tension des ressorts.

Le dispositif de manutention peut comporter un dispositif de déplacement de l'étui le long de l'axe longitudinal du logement disposé dans le logement.

La présente invention a également pour objet une installation de manutention d'un étui et des boîtes contenues dans l'étui comportant un dispositif de manutention selon l'invention, un dispositif d'ouverture d'étuis pour séparer une tête d'étui d'un corps d'étui et rendre accessible les objets contenus dans l'étui, et un dispositif d'extraction et de récupération des objets contenu dans les étuis.

Par exemple, le dispositif d'ouverture d'étuis et le dispositif d'extraction et de récupération des objets contenus dans les étuis sont disposés autour d'une roue.

Dans un exemple de réalisation, le dispositif d'ouverture d'étuis est un dispositif de découpe disposé au dessus de la roue et le dispositif d'extraction et de récupération est disposé en dessous de la roue de sorte que l'extraction des objets du corps de l'étui est obtenue par gravité.

Lors de l'extraction des objets, l'axe longitudinal du logement est de préférence orienté suivant un angle de 45° par rapport à une direction horizontale.

Le dispositif de d'extraction et de récupération peut comporter un bras d'axe longitudinal déplaçable au moins en rotation autour d'un axe parallèle à l'axe de la roue, un chariot monté mobile en translation sur le bras le long de l'axe longitudinal du bras, un logement porté par le chariot destiné à recevoir un objet contenu dans l'étui, et des moyens d'ouverture des mâchoires de butée.

Les moyens d'ouverture des mâchoires de butée comportent par exemple quatre doigts portés par le chariot et bordant le logement, lesdits doigts étant orientés parallèlement à l'axe longitudinal du bras et étant muni chacun à une extrémité libre d'une rampe destinée à coopérer avec les mâchoires de butée de sorte que lorsque les doigts sont insérés entre les mâchoires de butée, celles-ci s'écartent l'une de l'autre.

De manière avantageuse, le chariot comporte des moyens de détection de la présence de l'objet.

L'installation peut comporter un dispositif de récupération de l'étui vide, disposé sous la roue de sorte que l'évacuation du corps d'étui vide est obtenue par gravité et un dispositif de récupération des têtes d'étui.

Il peut être prévu de manière avantageuse que, lorsque les objets sont des boîtes contenant de l'oxyde de plutonium, l'installation soit confinée dans une boîte à gants.

### BRÈVE DESCRIPTION DES DESSINS

La présente invention sera mieux comprise à l'aide de la description qui va suivre et des dessins en annexe sur lesquels :
- la figure 1 est une représentation schématique d'une installation complète de manutention de l'étui et des boîtes contenues dans cet étui,
- la figure 2 est une vue de face d'un dispositif de maintien d'étui formant également une butée pour les boîtes contenues dans un étui, le dispositif étant mis en oeuvre dans l'installation de la figure 1, l'étui et les boîtes n'étant pas représentés
- la figure 3 est une vue arrière du dispositif de la figure 2,
- la figure 4 est une vue de face similaire à celle de la figure 2, un étui et une boîte étant en place,
- la figure 5 est une représentation schématique du dispositif de récupération des boîtes contenues dans l'étui.

### EXPOSÉ DÉTAILLÉ DE MODES DE RÉALISATION PARTICULIERS

Dans la description qui va suivre, le dispositif de manutention d'étuis et l'installation comportant un tel dispositif seront décrits en relation avec un étui comportant des boîtes remplies d'oxyde de plutonium. Cependant, il sera compris qu'il s'agit d'un exemple de réalisation, et que ce dispositif de manutention peut être appliqué à d'autres objets que des boîtes contenant de l'oxyde de plutonium, que ce soit dans le domaine nucléaire ou un autre domaine.

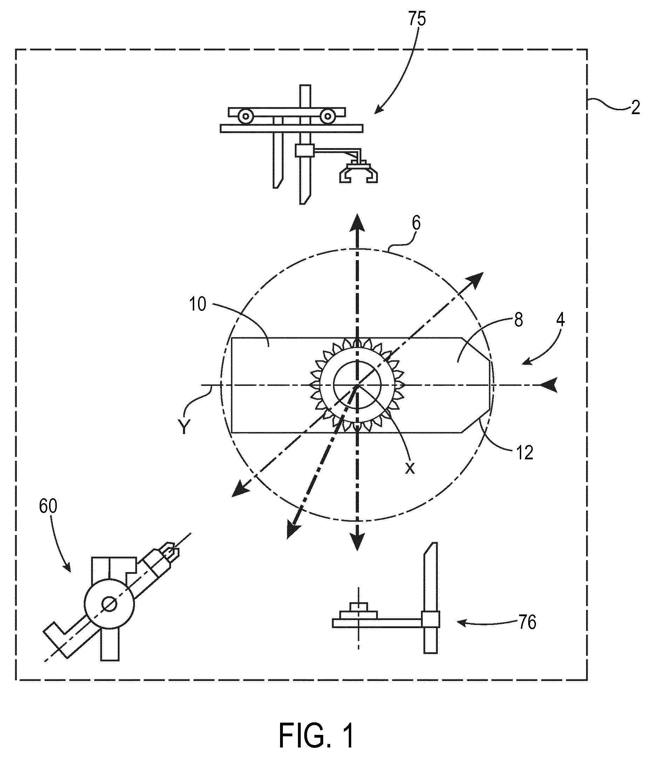

Sur la figure 1, on peut voir une représentation schématique d'une installation de manutention et de gestion d'étuis contenant des boîtes remplies d'oxyde de plutonium. Dans l'exemple représenté, l'étui présente une forme tubulaire.

Les étuis E contenant les boîtes B d'oxyde de plutonium sont transportés entre les ateliers de retraitement et les ateliers de fabrication de combustible nucléaire dans des containers. Lorsqu'ils arrivent aux ateliers de fabrication de combustible nucléaire, chaque étui est retiré individuellement du container et est introduit dans une première boîte à gants en vue de son introduction dans une seconde boîte à gants comportant l'installation représentée sur la figure 1. Cette seconde boîte à gants est symbolisée par un cadre en traits interrompus et est désignée par la référence 2.

Les étuis sont amenés individuellement dans la boîte à gants 2 pour être chargés dans le dispositif de manutention 4 de manière horizontale ; les étuis sont encore fermés de manière étanche lorsqu'ils sont chargés à l'intérieur du dispositif de manutention 4.

Dans l'exemple représenté et de manière avantageuse, le dispositif de manutention comporte une roue 6 montée mobile en rotation autour de son axe X, cet axe étant horizontal et étant perpendiculaire au plan de la feuille dans la représentation de la figure 1.

La roue 6 est apte à pivoter autour de son axe X de sorte à prendre différentes positions permettant à l'étui de subir différentes opérations au niveau de ces positions. La rotation de la roue est assurée par exemple par un moteur électrique (non représenté).

La roue 6 comporte un logement 8 d'axe Y s'étendant diamétralement dans la roue. Le logement 8 comporte une première extrémité longitudinale 10 fermée et une deuxième extrémité longitudinale 12 ouverte par laquelle sont introduits les étuis. Lorsque que l'étui est disposé dans le logement 8, son axe longitudinal s'étend parallèlement à l'axe Y du logement.

La deuxième extrémité 12 est équipée d'un dispositif de maintien de l'étui et de retenue des boîtes lorsque l'étui est ouvert. Ce dispositif sera désigné par la suite « dispositif de maintien » et désigné par la référence 14. En variante, le logement 6 d'étui pourrait être porté par un bras qui déplacerait en rotation et en translation le logement.

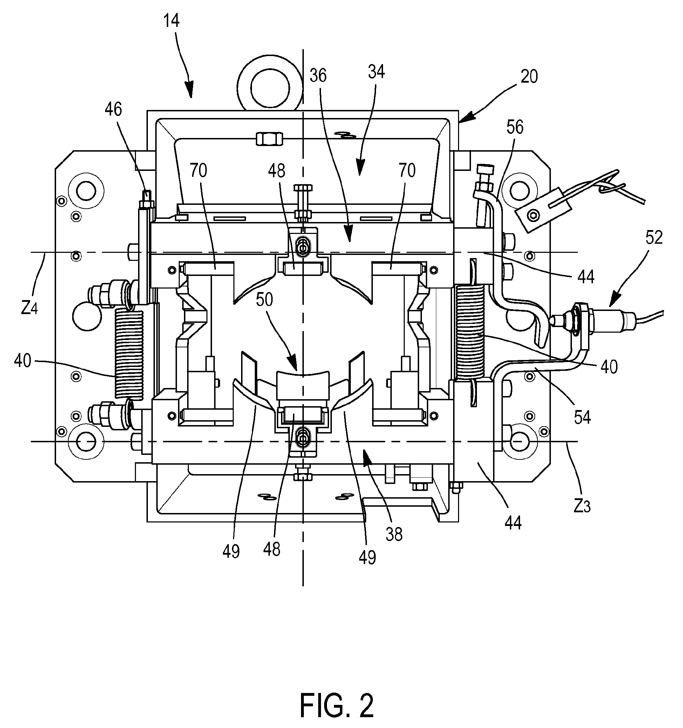

Le dispositif de maintien 14 est visible sur les figures 2, 3 et 4.

Nous allons maintenant décrire plus précisément ce dispositif de maintien 14.

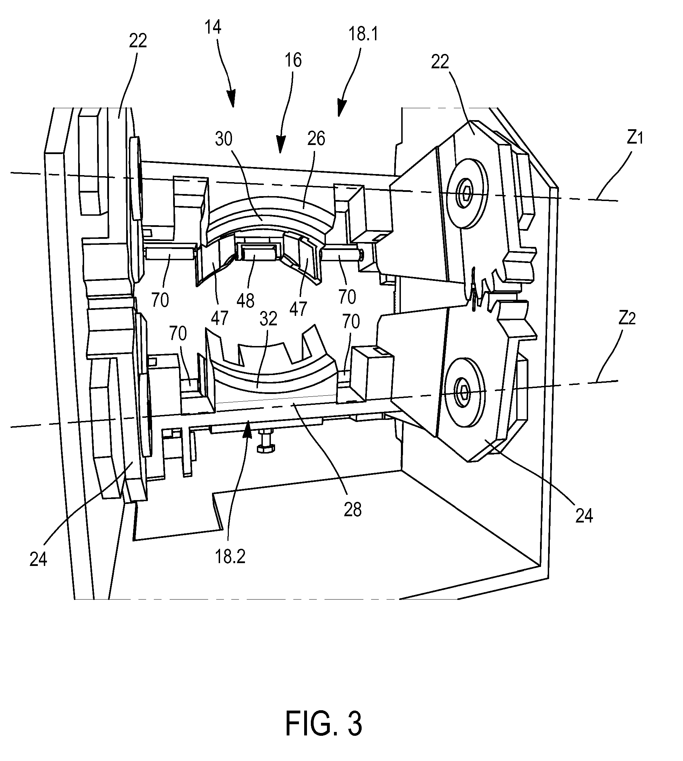

Sur les figures 2 et 3, on peut voir une vue de face et une vue arrière respectivement du dispositif de maintien seul disposé en dehors de la roue 6.

Le dispositif de maintien comporte des moyens de serrage 16 de l'étui. Les moyens de serrage 16 comportent une mâchoire supérieure 18.1 et une mâchoire inférieure 18.2 (figure 3). Les mâchoires supérieure 18.1 et inférieure 18.2 sont montées articulées sur un bâti 20.

Dans l'exemple représenté, la mâchoire supérieure 18.1 comporte deux flasques 22 s'étendant parallèlement à l'axe Y du logement 8. Chaque flasque est monté articulé sur le châssis 20 autour de l'axe Z1. La mâchoire inférieure 18.2 comporte elle aussi deux flasques 24 s'étendant parallèlement à l'axe Y et articulés en rotation sur le bâti 20 autour d'un axe Z2 parallèle à l'axe Z1.

Chaque mâchoire 18.1, 18.2 comporte des mors 26, 28 respectivement s'étendant entre les deux flasques 22, 24 respectivement et destinés à venir serrer l'étui. Les deux mors 26, 28 délimitent, en position de fermeture des mâchoires 18.1, 18.2, un logement correspondant à la section extérieure de l'étui.

Le dispositif de maintien 14 comporte également des moyens d'actionnement des mâchoires 18.1, 18.2 de sorte à provoquer leur rapprochement ou leur éloignement par pivotement autour des axes Z1, Z2 respectivement. Dans l'exemple représenté et de manière très avantageuse, les flasques 22 et 24 des mâchoires supérieure et inférieure comportent des dents s'engrenant l'une l'autre de sorte que la rotation de l'une des mâchoires dans un sens provoque la rotation de l'autre des mâchoires dans le sens opposé, assurant ainsi la synchronisation de fermeture ou d'ouverture des mâchoires 18.1, 18.2. Dans l'exemple représenté, les flasques de la mâchoire supérieure 18.1 comportent quatre dents engrenant trois dents des flasques de la mâchoire inférieure 18.2.

Cette réalisation a en outre pour avantage de simplifier le dispositif puisqu'il ne comporte alors plus qu'un seul actionneur pour déplacer simultanément les deux mâchoires 18.1, 18.2. Par exemple, le déplacement de l'une des mâchoires se fait au moyen d'un unique moteur électrique par l'intermédiaire d'une bielle articulée sur l'un des flasques (non représentés). Alternativement, un moteur pour chacune des mâchoires pourrait être utilisé pour l'actionnement de chacune des mâchoires de serrage 18.1 et 18.2, l'actionnement des deux moteurs étant alors synchronisé.

De manière très avantageuse, le mors 26 de la mâchoire supérieure 18.1 comporte un épaulement 30 formant une butée longitudinale pour l'étui. De manière avantageuse, le mors de la mâchoire inférieure 18.2, quant à lui, comporte un chanfrein 32 destiné au guidage des boîtes sortant de l'étui. Cette réalisation mettant en oeuvre une butée longitudinale sur l'une des mâchoires et un guidage sur l'autre mâchoire permet une grande fiabilité d'évacuation des boîtes et évite tout risque de coincement du fait d'un défaut de géométrie ou de dimensionnement des mâchoires.

Le dispositif de maintien 14 comporte également des moyens formant butée longitudinale pour les boîtes contenues dans l'étui. Ces moyens désignés 34 comportent une mâchoire supérieure 36 et une mâchoire inférieure 38, ces mâchoires seront désignées mâchoires de butée. Les mâchoires de butée 36, 38 sont portées par les mâchoires supérieure 18.1 et inférieure 18.2 de telle manière qu'elles soient disposées en aval des mâchoires 18.1, 18.2 dans le sens d'évacuation des boîtes contenues dans l'étui le long de l'axe Y. Les mâchoires de butée 36, 38 sont montées articulées sur le bâti 20 autour des axes Z1 et Z2 respectivement comme les mâchoires supérieure 18.1 et inférieure 18.2.

Les mâchoires de butée 36, 38 sont montées libres sur les mâchoires supérieure 18.1 et inférieure 18.2, de sorte que les mâchoires de butée 36, 38 puissent être écartées l'une de l'autre par pivotement autour des axes Z1 et Z2 indépendamment des mâchoires 18.1 et 18.2.

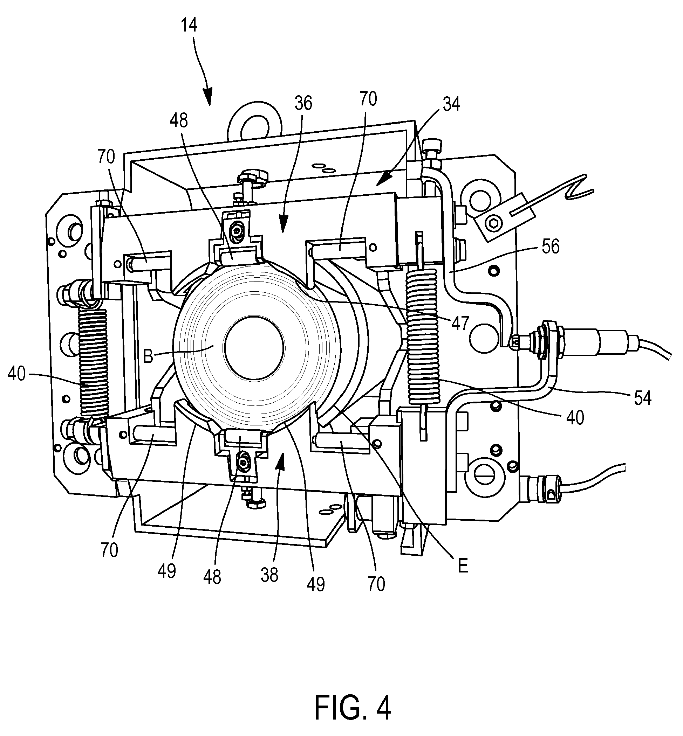

Les mâchoires de butée 36, 38 délimitent entre elles un passage de forme sensiblement circulaire 47 dont le diamètre est légèrement inférieur au diamètre extérieur des boîtes comme on peut le voir sur la figure 4. Dans un état assurant le passage des boîtes, le passage présente un diamètre légèrement supérieur au diamètre extérieur des boîtes.

Les mâchoires de butée 36, 38 sont rappelées l'une vers l'autre par des moyens élastiques 40 disposés latéralement de part et d'autre du passage des boîtes entre les mâchoires. Dans l'exemple représenté, ces moyens élastiques 40 sont formés par des ressorts hélicoïdaux reliant les mâchoires de butée 36, 38.

De manière très avantageuse, des moyens de réglage de la tension des ressorts 40 sont prévus. Pour cela, les ressorts de réglage sont montés sur chaque mâchoire de butée par une pièce 44 articulée sur les mâchoires de butée autour d'axes Z3 et Z4 parallèles aux axes Z1 et Z2 et une vis de réglage 46 est prévue pour modifier la tension des ressorts.

La mâchoire de butée 36 comporte deux mors 47 définissant un arc de cercle et la mâchoire de butée 38 comporte également deux mors 49 en forme d'arc de cercle. De manière très avantageuse, chacune des mâchoires 36, 38 comporte entre ses deux mors un rouleau 48 destiné au guidage et au roulage des boîtes lors de leur extraction. Chaque rouleau 48 est monté libre en rotation autour d'un axe parallèle aux axes Z1 et Z2.

En outre de manière très avantageuse, les mâchoires de butée 36, 38 sont destinées à être écartées l'une de l'autre au moyen d'un dispositif extérieur qui sera décrit par la suite, ce dispositif extérieur étant en outre destiné à récupérer simultanément les boîtes qui sont évacuées de l'étui.

Dans l'exemple représenté et de manière avantageuse, le dispositif de maintien 14 comporte des moyens de détection de la position des mâchoires de butée 36 et 38 l'une par rapport à l'autre. Avantageusement, ces moyens de détection comportent un seul capteur 52 mesurant la position relative des deux mâchoires de butée 36 et 38. Dans l'exemple représenté, le capteur 52 est monté sur un bras 54 solidaire en mouvement de la mâchoire de butée 38 et coopérant avec un bras 56 solidaire en mouvement de la mâchoire de butée 36. Ce capteur 52 est avantageusement uniquement mécanique, ce qui réduit les risques de défaillance par rapport à un capteur électronique, notamment dans une boîte à gants d'une installation de fabrication de combustible nucléaire.

En variante, on pourrait prévoir de disposer un capteur sur la mâchoire de butée inférieure 38 et un capteur sur la mâchoire de butée supérieure 36, et de comparer les mesures afin de déterminer la position relative des mâchoires de butée 36 et 38.

Concernant la détection des positions des mâchoires 18.1 et 18.2 de serrage de l'étui, celle-ci peut se faire directement au niveau du moteur électrique déplaçant au moins l'une des deux mâchoires 18.1, 18.2. Des capteurs portés par les mâchoires de serrage pourraient être prévus en variante.

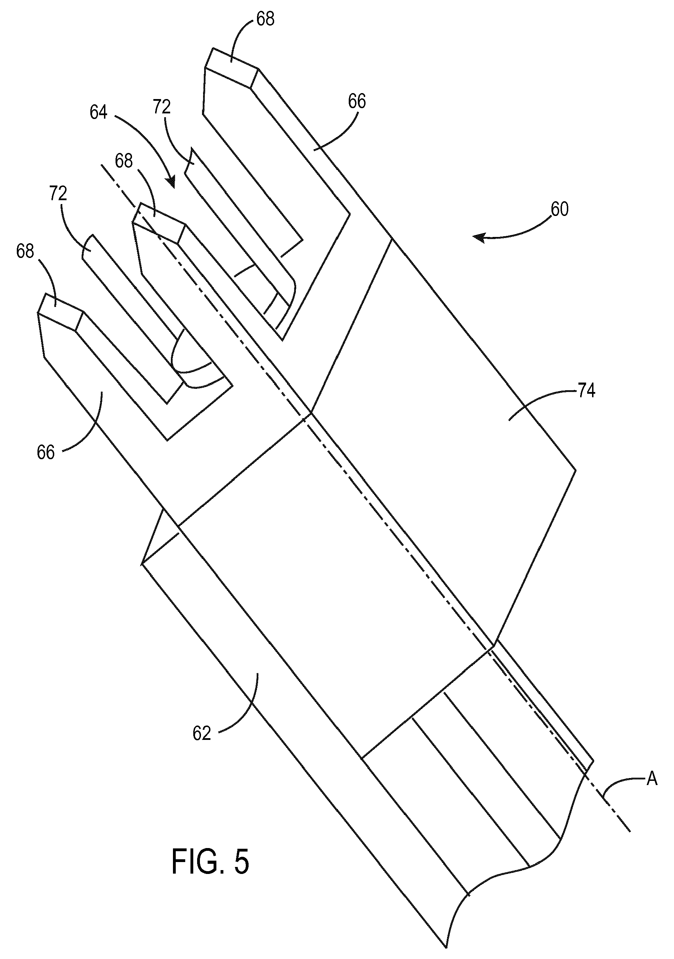

Nous allons maintenant décrire le dispositif d'ouverture des mâchoires de butée et de récupération des boîtes à l'aide de la représentation schématique de la figure 5.

Comme nous le verrons par la suite, les boîtes sont avantageusement évacuées par gravité. Le dispositif de récupération 60 comporte un bras 62 articulé en rotation autour d'un axe horizontal par une première extrémité et comportant à une deuxième extrémité un logement de réception 64 des boîtes évacuées de l'étui. Cette extrémité comporte également des moyens d'ouverture des mâchoires de butée 36, 38 formées par quatre doigts 66. Ces quatre doigts sont destinés à coopérer avec les faces en regard des mâchoires 36, 38 et à provoquer leur écartement l'une de l'autre en éloignement de l'axe Y de sorte à élargir le passage délimité par les mors des mâchoires de butée 36, 38.

Pour cela, les doigts comportent des extrémités libres 68 munies d'une face inclinée - également dénommées rampes 68 - de sorte que leur pénétration longitudinale le long de l'axe Y entre les mâchoires de butée 36, 38 provoque l'écartement des mâchoires de butée à l'encontre de l'effort exercé par les ressorts 40. De manière très avantageuse, chaque mâchoire 36, 38 comporte deux rouleaux 70 de part et d'autres des mors 47, 49 destinés à coopérer avec les extrémités inclinées des doigts 66 de sorte que ces extrémités 68 roulent sur les rouleaux 70. Cette réalisation présente l'avantage d'éviter les coincements et de réduire l'usure des doigts et des mâchoires de butée 36, 38.

Le dispositif de récupération comprend également une pince 72 qui se referme lorsqu'il est détecté que la boîte se retrouve dans le logement.

De manière avantageuse, un capteur est prévu dans le logement pour déterminer la présence ou non de la boîte. Avantageusement, le logement est porté par un chariot 74 mobile le long de l'axe A du bras, ce qui permet de déplacer la boîte contenue dans le logement et de la déplacer vers un chariot de stockage (non représenté) en vue, par exemple, d'une étape de pesée de la boîte et/ou d'une étape suivante d'ouverture et de vidage pour le fabrication du combustible nucléaire MOX.

Par exemple, la pince est commandée au moyen d'un vérin et le chariot est déplacé par un moteur de type à vis.

Nous allons maintenant décrire les différentes stations de l'installation de manutention et de gestion de l'étui contenant les boîtes en relation avec la figure 1.

L'installation contenue dans la boîte à gants 2 comporte différentes stations réparties autour de la roue 6. Elle comporte un dispositif d'ouverture 75 de l'étui, comportant des moyens de découpe d'une extrémité de l'étui, ce dispositif de découpe est par exemple celui décrit dans le document FR 2 182 902. Il comporte une molette de découpe montée en rotation et qui va découper la circonférence du tube.

La roue 6 comporte avantageusement un système de déplacement longitudinal le long de l'axe Y de l'étui, qui est utilisé pour permettre la découpe de l'étui, plaçant l'étui de sorte que son extrémité destinée à être découpée fasse saillie de la roue 6 et puisse être découpée par la molette. Avantageusement, le dispositif de découpe est disposé verticalement au-dessus de la roue à une position angulaire de 90° par rapport à la position d'introduction de l'étui dans la roue 6. L'installation comporte également le dispositif de récupération 60 des boîtes. De manière avantageuse, celui-ci est disposé en dessous de la roue 6 de sorte que le logement soit orienté à 45° par rapport à un axe horizontal, ce qui assure une évacuation par gravité des boîtes contenues dans l'étui.

L'installation peut également comporter un dispositif de récupération 76 du corps d'étui lorsque celui-ci a été entièrement vidé de ses boîtes. Dans l'exemple représenté, celui-ci est disposé en dessous de la roue 6 de sorte que l'axe Y du logement 8 soit orienté verticalement.

Nous allons maintenant décrire les différentes étapes de manutention et de vidage d'un étui entre son introduction dans la boîte à gants 2 et son évacuation dans le dispositif de récupération 76.

Comme décrit précédemment, l'étui E est introduit dans la boîte à gants 2 en position horizontale, la roue 6 est orientée de sorte que l'axe Y du logement 8 soit également à l'horizontal.

L'étui E fermé est introduit dans le logement 8 par exemple au moyen d'un poussoir (non représenté). Pour cela les mâchoires 18.1 et 18.2 ont été préalablement écartées de sorte à aménager un passage suffisant pour le passage de l'étui. Du fait de la structure du dispositif de maintien 14, les mâchoires de butée 36 et 38 sont également écartées laissant le passage libre à l'étui E. Lorsque l'étui E est en place dans le logement 8, les mâchoires 18.1, 18.2 sont refermées tenant serré l'étui E.

La roue 6 est ensuite pivotée d'un angle de 90° dans un sens antihoraire de sorte que le dispositif de maintien 14 soit disposé dans la partie supérieure de la roue 6 en regard du dispositif de découpe. L'extrémité fermée de l'étui E située du côté du dispositif de maintien 14 va alors être découpée. Pour cela, les mâchoires de serrage 18.1, 18.2 sont écartées l'une de l'autre provoquant également l'ouverture des mâchoires de butée 36, 38. Le dispositif de déplacement le long de l'axe Y déplace alors l'étui qui va être déplacé vers le haut, provoquant la sortie de l'extrémité de l'étui destinée à être découpée. L'extrémité de l'étui destinée à être découpée est amenée dans le dispositif de découpe. Le dispositif de découpe est alors actionné lorsque le bon positionnement de l'étui E est détecté. La molette découpe la périphérie tubulaire de l'étui E de sorte à séparer une tête de l'étui du corps de l'étui qui contient les boîtes. La tête de l'étui séparée du corps de l'étui est alors récupérée, par exemple au moyen d'un grappin et est ensuite évacuée.

Lorsque la découpe est terminée, le dispositif de déplacement le long de l'axe Y abaisse le corps de l'étui dans le logement 8, et les mâchoires de serrage 18.1 et 18.2 sont refermées provoquant à nouveau de serrage du corps de l'étui, l'épaulement formé dans la mâchoire supérieure 18.1 formant une butée pour l'extrémité ouverte du corps de l'étui. Les mâchoires 36 et 38 de butée forment alors une butée longitudinale le long de l'axe Y pour les boîtes B qui sont maintenant accessibles par l'extrémité ouverte du corps de l'étui (figure 4).

Lors d'une étape suivante, en vue de l'évacuation des boîtes contenues dans le corps de l'étui, la roue 6 pivote autour de son axe en direction du dispositif de récupération des boîtes. Dans l'exemple représenté, la roue pivote d'un angle de 135° dans le sens antihoraire de sorte à orienter l'axe Y du logement selon un axe de 45° par rapport à l'horizontale. Le bras du dispositif de récupération est orienté de sorte que son axe A soit sensiblement aligné avec l'axe Y du logement 8. Ensuite, le chariot portant des doigts 66 se déplace le long de l'axe A en direction du dispositif de maintien 14 ; les doigts pénètrent alors entre les deux mâchoires de butée 36 et 38, et les extrémités inclinées ou rampes 68 des doigts glissent le long de rouleaux provoquant l'écartement des mâchoires de butée 36 et 38 sans provoquer l'ouverture des mâchoires de serrage 18.1, 18.2. Le passage délimité par les mors des mâchoires de butée 36 et 38 est alors suffisant pour permettre le passage d'une boîte B. En outre, du fait de l'inclinaison vers le bas du logement 8, la boîte B glisse naturellement par gravité vers le logement du dispositif de récupération. Le dispositif de récupération emmène ensuite la boîte qu'il vient de récupérer par exemple vers une balance de pesée. Un dispositif de transfert est prévu pour décharger la boîte du chariot et la disposer sur la balance.

Lorsqu'il a été déchargé de la boîte, il se remet en position pour évacuer une nouvelle boîte. Ces opérations sont répétées jusqu'à ce que l'étui soit vide. Ensuite, la roue 6 pivote d'un angle de 45° dans le sens antihoraire de sorte à positionner l'axe Y du logement 8 verticalement, et son ouverture orientée vers le bas, en face du dispositif de récupération des corps d'étuis. L'ouverture des mâchoires de serrage 18.1, 18.2 est actionnée au moyen du moteur électrique, les mâchoires de butée 36, 38 s'ouvrent simultanément.

Le corps de l'étui est alors libéré et, du fait de la force de gravité, chute dans le dispositif de récupération des corps d'étui. Ce dispositif peut être formé par exemple par un panier destiné à récupérer plusieurs corps d'étui. De même, concernant les têtes d'étui, le dispositif de récupération de celles-ci peut être formé par un panier recevant plusieurs têtes d'étui. Lorsque les paniers de têtes d'étui et de corps d'étui sont pleins, ceux-ci sont alors évacués en vue de leur traitement.

Il est envisageable d'ouvrir l'étui avant son introduction dans la roue, la roue servant uniquement à extraire une à une les boîtes. Cette variante est plus adaptée à la manipulation d'objets ne nécessitant pas de confinement.

Ce dispositif de manutention et de gestion des étuis contenant des boîtes est particulièrement robuste puisqu'il est entièrement mécanique. En outre, il peut comporter un nombre d'actionneurs réduit puisqu'un seul actionneur est suffisant pour commander le dispositif de maintien. De plus, il est très fiable, les étuis étant maintenus par serrage et une butée longitudinale étant prévue ce qui évite tout risque que l'étui s'échappe de la roue, tout en facilitant l'évacuation des boîtes.

Par ailleurs, la manipulation des étuis et des boîtes est effectuée avec beaucoup de précaution, les boîtes ne subissant aucun choc important. Les risques de détérioration des boîtes sont donc considérablement réduits et donc la sécurité de la manipulation est assurée.

Le dispositif de manutention selon l'invention peut en conséquence être appliqué dans des domaines techniques où la manutention et le transfert d'objets fragiles sont requis.

## Revendications

1. Dispositif de manutention d'étuis et de boîtes contenus dans les étuis, les étuis étant de forme cylindrique, ledit dispositif comportant un logement d'axe longitudinal (Y) destiné à recevoir un étui (E), ledit logement (8) étant fermé à une première extrémité longitudinale et ouvert à une seconde extrémité longitudinale, un dispositif de maintien (14) monté au niveau de la seconde extrémité du logement (8), ledit dispositif de maintien (14) comportant deux mâchoires de serrage (18.1, 18.2) aptes à être déplacées autour d'un axe (Z1, Z2) orthogonal à l'axe longitudinal (Y) du logement (8), lesdites mâchoires de serrage (18.1, 18.2) étant destinées à appliquer un effort de serrage sur l'étui (E) de sorte à maintenir l'étui longitudinalement dans le logement (8), au moins un actionneur pour ouvrir et fermer lesdites mâchoires de serrage (18.1, 18.2), deux mâchoires de butée (36, 38), chacune desdites mâchoires de butée (36, 38) étant portée par une mâchoire de serrage (18.1, 18.2) et étant articulée de manière libre autour de l'axe de rotation (Z1, Z2) de la mâchoire de serrage (18.1, 18.2), lesdits mâchoires de butée (36, 38) étant rappelées l'une vers l'autre en position butée par des moyens élastiques (40), de telle sorte que l'ouverture des mâchoires de serrage (18.1, 18.2) provoque l'ouverture des mâchoires de butée (36, 38) et de telle sorte que les mâchoires de butée(36, 38) peuvent être ouverte indépendamment des mâchoires de serrage (18.1, 18.2).

2. Dispositif de manutention selon la revendication 1, comportant une roue (6) mobile en rotation autour de son axe, ledit logement (8) étant réalisé dans ladite roue (6) et s'étendant le long d'un diamètre de ladite roue.

3. Dispositif de manutention selon la revendication 1 ou 2, dans lequel l'une des mâchoires de serrage (18.1, 18.2) comporte un épaulement formant une butée longitudinale pour l'étui (E), l'autre mâchoire de serrage (18.2, 18.1) comportant avantageusement une face inclinée par rapport à l'axe (Y) du logement (8) vers l'extérieur du logement (8).

4. Dispositif de manutention selon l'une des revendications 1 à 3, dans lequel au moins l'une des mâchoires de butée (36, 38) comporte un rouleau libre en rotation bordant le passage délimité par les deux mâchoires de butée (36, 38) de sorte à faciliter la sortie de l'objet contenu dans l'étui.

5. Dispositif de manutention selon l'une des revendications 1 à 4, dans lequel chaque mâchoire de butée (36, 38) comporte des faces d'ouverture de part et d'autre du passage délimité par les deux mâchoires de butée (36, 38), lesdites faces d'ouverture d'une mâchoire de butée (36, 38) étant en regard des faces d'ouverture de l'autre mâchoire de butée (38, 36), lesdites faces d'ouverture étant destinées à coopérer chacune avec des rampes (68) portées par un dispositif d'ouverture, lesdites faces d'ouverture comportant avantageusement chacune un rouleau libre en rotation coopérant avec une desdites rampes.

6. Dispositif de manutention selon l'une des revendications 1 à 5, comportant au moins un capteur de mesure de la position des mâchoires de butée (36, 38), avantageusement un capteur unique mesurant la position relative des mâchoires de butée (36, 38), ledit capteur étant porté par un bras solidaire en mouvement d'une des mâchoires (36, 38) et étant sensible au déplacement d'un autre bras solidaire en mouvement de l'autre mâchoire de butée (38, 36).

7. Dispositif de manutention selon l'une des revendications 1 à 6, comportant un actionneur pour déplacer en rotation l'une des mâchoires de serrage (18.1, 18.2) et des moyens de transmission pour transmettre le mouvement à l'autre mâchoire de serrage de sorte à provoquer un éloignement ou un rapprochement des mâchoires de serrage (18.1, 18.2).

8. Dispositif de manutention selon la revendication 7, dans lequel les mâchoires de serrage (36, 38) comportent deux flasques latéraux articulés sur un bâti (20) du dispositif de manutention, et dans lequel les moyens de transmission sont formés par des dents portées par chaque flasque latéral, lesdits flasques latéraux comportant des dents s'engrenant de sorte que la rotation dans un sens de l'une des mâchoire de serrage provoque la rotation dans un sens opposé de l'autre mâchoire de serrage (18.1, 18.2).

9. Dispositif de manutention selon l'une des revendications 1 à 8, dans lequel les moyens élastiques (40) rappelant les mâchoires de butée (36, 38) comportent deux ressorts hélicoïdaux disposés de part et d'autre de l'axe longitudinal (Y) du logement (8), chaque ressort hélicoïdal étant fixé par une extrémité à une mâchoire de butée (36, 38) et par une autre extrémité à l'autre mâchoire de butée (38, 36), le dispositif comportant avantageusement des moyens de réglage de la tension des ressorts.

10. Dispositif de manutention selon l'une des revendications 1 à 9, comportant un dispositif de déplacement de l'étui le long de l'axe longitudinal (Y) du logement (8) disposé dans le logement (8).

11. Installation de manutention d'un étui et des boîtes contenues dans l'étui comportant un dispositif de manutention selon l'une des revendications 1 à 10, un dispositif d'ouverture d'étuis pour séparer une tête d'étui d'un corps d'étui et rendre accessible les objets contenus dans l'étui, et un dispositif d'extraction et de récupération des objets contenu dans les étuis.

12. Installation selon la revendication 11 en combinaison avec la revendication 2, dans laquelle le dispositif d'ouverture d'étuis et le dispositif d'extraction et de récupération des objets contenus dans les étuis sont disposés autour d'une roue (6).

13. Installation selon la revendication 12, dans laquelle le dispositif d'ouverture d'étuis est un dispositif de découpe disposé au dessus de la roue (6) et le dispositif d'extraction et de récupération est disposé en dessous de la roue (6) de sorte que l'extraction des objets du corps de l'étui est obtenu par gravité, l'axe longitudinal (Y) du logement (8) étant avantageusement orienté suivant un angle de 45° par rapport à une direction horizontale lors de l'extraction des objets.

14. Installation selon l'une des revendications 11 à 13, dans laquelle le dispositif de d'extraction et de récupération comporte un bras d'axe longitudinal (A) déplaçable au moins en rotation autour d'un axe parallèle à l'axe de la roue (6), un chariot monté mobile en translation sur le bras le long de l'axe longitudinal (A) du bras, un logement porté par le chariot destiné à recevoir un objet contenu dans l'étui, et des moyens d'ouverture (66, 68) des mâchoires de butée (36, 38), le chariot comportant des moyens de détection de la présence de l'objet et/ou les moyens d'ouverture (66, 68) des mâchoires de butée (36, 38) comportant avantageusement quatre doigts (66) portés par le chariot et bordant le logement, lesdits doigts (66) étant orientés parallèlement à l'axe longitudinal (A) du bras et étant muni chacun à une extrémité libre d'une rampe (68) destinée à coopérer avec les mâchoires de butée (36, 38) de sorte que lorsque les doigts (66) sont insérés entre les mâchoires de butée (36, 38), celles-ci s'écartent l'une de l'autre.

15. Installation selon l'une des revendications 11 à 14, comportant un dispositif de récupération de l'étui vide, disposé sous la roue de sorte que l'évacuation du corps d'étui vide est obtenue par gravité et un dispositif de récupération des têtes d'étui.

16. Installation selon l'une des revendications 11 à 15 dans laquelle les objets sont des boîtes contenant de l'oxyde de plutonium et ladite installation est confinée dans une boîte à gants.

## Patentansprüche

1. Vorrichtung zur Handhabung von Hüllen und von Kisten, die in den Hüllen enthalten sind, wobei die Hüllen eine zylindrische Form aufweisen, wobei die Vorrichtung eine Aufnahme mit einer longitudinalen Achse (Y) umfasst, die zur Aufnahme einer Hülle (E) bestimmt ist, wobei die Aufnahme (8) an einem ersten longitudinalen Ende geschlossen und an einem zweiten longitudinalen Ende offen ist, eine Haltevorrichtung (14), die im Bereich des zweiten Endes der Aufnahme (8) montiert ist, wobei die Haltevorrichtung (14) zwei Klemmbacken (18.1, 18.2) umfasst, die dazu ausgelegt sind, um eine Achse (Z1, Z2) orthogonal zur longitudinalen Achse (Y) der Aufnahme (8) herum verlagert zu werden, wobei die Klemmbacken (18.1, 18.2) dazu ausgelegt sind, eine Klemmkraft auf die Hülle (E) derart auszuüben, dass die Hülle longitudinal in der Aufnahme (8) gehalten wird, wenigstens ein Betätigungselement zum Öffnen und Schließen der Klemmbacken (18.1, 18.2), zwei Anschlagbacken (36, 38), wobei jede der Anschlagbacken (36, 38) von einer Klemmbacke (18.1, 18.2) getragen wird und frei drehbar um die Drehachse (Z1, Z2) der Klemmbacke (18.1, 18.2) gelagert ist, wobei die Anschlagbacken (36, 38) aufeinander zu in einer Anschlagposition durch elastische Mittel (40) zurückgestellt werden, derart, dass das Öffnen der Klemmbacken (18.1, 18.2) das Öffnen der Anschlagbacken (36, 38) bewirkt, und derart, dass die Anschlagbacken (36, 38) unabhängig von den Klemmbacken (18.1, 18.2) geöffnet werden können.

2. Handhabungsvorrichtung nach Anspruch 1, umfassend ein Rad (6), das um seine Achse drehbeweglich ist, wobei die Aufnahme (8) in dem Rad (6) realisiert ist und sich entlang eines Durchmessers des Rads erstreckt.

3. Handhabungsvorrichtung nach Anspruch 1 oder 2, bei der eine der Klemmbacken (18.1, 18.2) eine Schulter umfasst, die einen longitudinalen Anschlag für die Hülle (E) bildet, wobei die andere Klemmbacke (18.2, 18.1) vorzugsweise eine Fläche umfasst, die bezüglich der Achse (Y) der Aufnahme (8) zur Außenseite der Aufnahme (8) hin geneigt ist.

4. Handhabungsvorrichtung nach einem der Ansprüche 1 bis 3, bei der wenigstens eine der Anschlagbacken (36, 38) eine drehbewegliche Rolle umfasst, die an den Durchgang angrenzt, der durch die zwei Anschlagbacken (36, 38) begrenzt wird, derart, dass das Ausführen des in der Hülle enthaltenen Objekts erleichtert wird.

5. Handhabungsvorrichtung nach einem der Ansprüche 1 bis 4, bei der jede Anschlagbacke (36, 38) Öffnungsflächen auf beiden Seiten des Durchgangs umfasst, der durch die zwei Anschlagbacken (36, 38) begrenzt wird, wobei die Öffnungsflächen einer Anschlagbacke (36, 38) gegenüber den Öffnungsflächen der anderen Anschlagbacke (38, 36) sind, wobei die Öffnungsflächen dazu ausgelegt sind, jeweils mit Rampen (68) zusammenzuwirken, die von einer Öffnungsvorrichtung getragen werden, wobei die Öffnungsflächen vorzugsweise jeweils eine drehbewegliche Rolle umfassen, die mit einer der Rampen zusammenwirkt.

6. Handhabungsvorrichtung nach einem der Ansprüche 1 bis 5, umfassend wenigstens einen Sensor zum Messen der Position der Anschlagbacken (36, 38), vorzugsweise einen einzigen Sensor, der die Relativposition der Anschlagbacken (36, 38) misst, wobei der Sensor von einem Arm getragen wird, der zur Bewegung mit einer der Backen (36, 38) verbunden ist und auf eine Verlagerung eines anderen Arms sensitiv ist, der zur Bewegung mit der anderen Anschlagbacke (38, 36) verbunden ist.

7. Handhabungsvorrichtung nach einem der Ansprüche 1 bis 6, umfassend ein Betätigungselement zur Drehverlagerung einer der Klemmbacken (18.1, 18.2) sowie Übertragungsmittel zum Übertragen der Bewegung auf die andere Klemmbacke derart, dass ein Entfernen oder ein Annähern der Klemmbacken (18.1, 18.2) bewirkt wird.

8. Handhabungsvorrichtung nach Anspruch 7, bei der die Klemmbacken (36, 38) zwei laterale Flansche umfassen, die an einem Rahmen (20) der Handhabungsvorrichtung gelagert sind, und bei der die Übertragungsmittel durch Zähne gebildet sind, die von jedem lateralen Flansch getragen werden, wobei die lateralen Flansche Zähne umfassen, die derart eingreifen, dass die Drehung in einer Richtung einer der Klemmbacken die Drehung in eine entgegengesetzte Richtung der anderen Klemmbacke (18.1, 18.2) bewirkt.

9. Handhabungsvorrichtung nach einem der Ansprüche 1 bis 8, bei der die elastischen Mittel (40), die die Anschlagbacken (36, 38) zurückstellen, zwei Schraubenfedern umfassen, die auf beiden Seiten der longitudinalen Achse (Y) der Aufnahme (8) angeordnet sind, wobei jede Schraubenfeder an einem Ende an einer Anschlagbacke (36, 38) befestigt ist und an einem anderen Ende an der anderen Anschlagbacke (38, 36), wobei die Vorrichtung vorzugsweise Mittel zur Regelung der Spannung der Federn umfasst.

10. Handhabungsvorrichtung nach einem der Ansprüche 1 bis 9, umfassend eine Vorrichtung zur Verlagerung der Hülle entlang der longitudinalen Achse (Y) der Aufnahme (8), die in der Aufnahme (8) angeordnet ist.

11. Anlage zur Handhabung einer Hülle und von Kisten, die in der Hülle enthalten sind, umfassend eine Handhabungsvorrichtung nach einem der Ansprüche 1 bis 10, eine Vorrichtung zum Öffnen von Hüllen zum Separieren eines Hüllenkopfs von einem Hüllenkörper und Zugänglichmachen der in der Hülle enthaltenen Objekte, sowie eine Vorrichtung zur Extraktion und zum Aufsammeln der in den Hüllen enthaltenen Objekte.

12. Anlage nach Anspruch 11 in Kombination mit Anspruch 2, bei der die Vorrichtung zum Öffnen von Hüllen und die Vorrichtung zur Extraktion und zum Aufsammeln der in den Hüllen enthaltenen Objekte um ein Rad (6) herum angeordnet sind.

13. Anlage nach Anspruch 12, bei der die Vorrichtung zum Öffnen von Hüllen eine Schneidvorrichtung ist, die über dem Rad (6) angeordnet ist, und die Vorrichtung zur Extraktion und zum Aufsammeln unter dem Rad (6) derart angeordnet ist, dass die Extraktion der Objekte aus dem Hüllenkörper durch Schwerkraft erzielt wird, wobei die longitudinale Achse (Y) der Aufnahme (8) während der Extraktion der Objekte vorzugsweise unter einem Winkel von 45° bezüglich einer horizontalen Richtung orientiert ist.

14. Anlage nach einem der Ansprüche 11 bis 13, bei der die Vorrichtung zur Extraktion und zum Aufsammeln einen Arm mit longitudinaler Achse (A) umfasst, der wenigstens in Drehung um eine Achse parallel zur Achse des Rads (6) verlagerbar ist, einen Wagen, der translationsbeweglich an dem Arm entlang der longitudinalen Achse (A) des Arms montiert ist, eine von dem Wagen getragene Aufnahme, die dazu ausgelegt ist, ein in der Hülle enthaltenes Objekt zu empfangen, sowie Mittel (66, 68) zum Öffnen der Anschlagbacken (36, 38), wobei der Wagen Mittel zur Erfassung des Vorhandenseins des Objekts umfasst, und/oder die Mittel (66, 68) zum Öffnen der Anschlagbacken (36, 38) vorzugsweise vier Finger (66) umfassen, die von dem Wagen getragen werden und an die Aufnahme angrenzen, wobei die Finger (66) parallel zur longitudinalen Achse (A) des Arms orientiert sind und jeweils an einem freien Ende mit einer Rampe (68) ausgestattet sind, die dazu ausgelegt ist, mit den Anschlagbacken (36, 38) derart zusammenzuwirken, dass dann, wenn die Finger (66) zwischen die Anschlagbacken (36, 38) eingeführt werden, diese sich voneinander beabstanden.

15. Anlage nach einem der Ansprüche 11 bis 14, umfassend eine Vorrichtung zum Aufsammeln der leeren Hülle, die unter dem Rad derart angeordnet ist, dass die Entfernung des leeren Hüllenkörpers durch Schwerkraft erzielt wird, sowie eine Vorrichtung zum Aufsammeln der Hüllenköpfe.

16. Anlage nach einem der Ansprüche 11 bis 15, bei der die Objekte Kisten sind, die Plutoniumoxid enthalten, und die Anlage in einem Handschuhkasten eingeschlossen ist.

## Claims

1. A handling device for cases and boxes contained in the cases, the cases being of cylindrical form, said device comprising a housing of longitudinal axis (Y) intended to receive a case (E), said housing (8) being closed at a first longitudinal end and open at a second longitudinal end, a holding device (14) mounted at the level of the second end of the housing (8), said holding device (14) comprising two clamping jaws (18.1, 18.2) capable of being moved about an axis (Z1, Z2) orthogonal to the longitudinal axis (Y) of the housing (8), said clamping jaws (18.1, 18.2) being configured to apply a clamping force to the case (E) so as to hold the case longitudinally in the housing (8), at least one actuator for opening and closing said clamping jaws (18.1, 18.2), two stop jaws (36, 38), each of said stop jaws (36, 38) being supported by a clamping jaw (18.1, 18.2) and being articulated in a free manner about the axis of rotation (Z1, Z2) of the clamping jaw (18.1, 18.2), said stop jaws (36, 38) being moved towards each other in a stop position by resilient means (40), such that the opening of the clamping jaws (18.1, 18.2) causes opening of the stop jaws (36, 38) and such that the stop jaws (36, 38) can be opened independently of the clamping jaws (18.1, 18.2).

2. The handling device according to claim 1, comprising a wheel (6) rotatably mounted about its axis, said housing (8) being arranged in said wheel (6) and extending along a diameter of said wheel.

3. The handling device according to any of claims 1 and 2, wherein one of the clamping jaws (18.1, 18.2) comprises a shoulder forming a longitudinal stop for the case (E), the other clamping jaw (18.2, 18.1) comprising advantageously a face inclined relative to the axis (Y) of the housing (8) towards the exterior of the housing (8).

4. The handling device according to any of claims 1 to 3, wherein at least one of the stop jaws (36, 38) comprises a roller free in rotation bordering the passage delimited by the two stop jaws (36, 38) so as to make it easy to take out the object contained in the case.

5. The handling device according to any of claims 1 to 4, wherein each top jaw (36, 38) comprises opening faces on either side of the passage delimited by the two stop jaws (36, 38), said opening faces of a stop jaw (36, 38) being opposite the opening faces of the other stop jaw (38, 36), said opening faces each being configured to cooperate with ramps (68) supported by an opening device, said opening faces each comprising advantageoulsy a roller free in rotation cooperating with one of said ramps.

6. The handling device according to any of claims 1 to 5, comprising at least one sensor for measuring the position of the stop jaws (36, 38), advantageously a single sensor measuring the relative position of the stop jaws (36, 38), said sensor being supported by an arm secured in movement with one of the jaws (36, 38) and being sensitive to displacement of another arm secured in movement with the other stop jaw (38, 36).

7. The handling device according to any of claims 1 to 6, comprising an actuator for rotatably moving one of the clamping jaws (18.1, 18.2) and transmission means for transmitting movement to the other clamping jaw so as to cause the clamping jaws (18.1, 18.2) to move away or come more closely.

8. The handling device according to claim 7, wherein the clamping jaws (36, 38) comprise two lateral flanges articulated on a frame (20) of the handling device, and wherein the transmission means are formed by teeth supported by each lateral flange, said lateral flanges comprising teeth meshing such that the rotation in one direction of one of the clamping jaws causes rotation in a direction opposite the other clamping jaw (18.1, 18.2).

9. The handling device according to any of claims 1 to 8, wherein the resilient means (40) bringing the stop jaws (36, 38) back comprise two helicoidal springs arranged on either side of the longitudinal axis (Y) of the housing (8), each helicoidal spring being fixed by one end to a stop jaw (36, 38) and by another end to the other stop jaw (38, 36), the device adavntageously comprising adjustment means of the tension of the springs.

10. The handling device according to any of claims 1 to 9, comprising a device for displacement of the case along the longitudinal axis (Y) of the housing (8) arranged in the housing (8).

11. An installation for handling a case and boxes contained in the case comprising a handling device according to any of claims 1 to 10, a device for opening cases to separate a case head from a case body and make the objects contained in the case accessible, and a device for extraction and retrieval of the objects contained in the cases.

12. The installation according to claim 11 in combination with claim 2, wherein the device for opening cases and the device for extraction and retrieval of the objects contained in the cases are arranged about a wheel (6).

13. The installation according to claim 12, wherein the device for opening cases is a cutting device arranged above the wheel (6) and the device for extraction and retrieval is arranged below the wheel (6) such that the extraction of the objects from the body of the case is achieved by gravity, the longitudinal axis (Y) of the housing (8) is advantageoulsy oriented at an angle of 45° relative to a horizontal direction during extraction of the objects,

14. The installation according to any of claims 11 to 13 wherein the extraction and recuperation device comprises an arm of longitudinal axis (A) displaceable at least in rotation about an axis parallel to the axis of the wheel (6), a trolley movably mounted in translation on the arm along the longitudinal axis (A) of the arm, a housing supported by the trolley intended to receive an object contained in the case, and opening means (66, 68) of the stop jaws (36, 38), the trolley comprising detection means of the presence of the object or/and the opening means (66, 68) of the stop jaws (36, 38) advantageously comprising four fingers (66) supported by the trolley and bordering the housing, said fingers (66) being oriented parallel to the longitudinal axis (A) of the arm and each being fitted at a free end by a ramp (68) configured to cooperate with the stop jaws (36, 38) such that when the fingers (66) are inserted between the stop jaws (36, 38), the latter move away from each other.

15. The installation according to any of claims 11 to 14, comprising a device for retrieval of the empty case, arranged under the wheel such that evacuation of the empty case body is achieved by gravity and a device for retrieval of the case heads.

16. The installation according to any of claims 11 to 15, wherein the objects are boxes containing plutonium oxide and said installation is confined in a glove box.
